# EUROPEAN PATENT SPECIFICATION

(11) **EP 1 923 255 B1**
(45) Date of publication and mention of the grant of the patent: **01.07.2009**
(21) Application number: 07118494.9
(22) Date of filing: 15.10.2007
(51) Int. Cl.: B60K 31/00, F16H 61/02, F16H 63/42, B60W 50/02, B60R 16/023

(54) **Shift indication method for transmission**
Schaltanzeigeverfahren für ein Getriebe
Procédé d'indication de commutation pour transmission

(30) Priority: 17.11.2006 JP 2006311994
(43) Date of publication of application: 21.05.2008
(73) Proprietor: Honda Motor Co., Ltd., Tokyo 107-8556 (JP)
(72) Inventor: Okayasu, Kouji, Saitama 351-0193 (JP); Nishio, Masaki, Saitama 351-0193 (JP)
(74) Representative: Rupp, Christian

(56) References cited:
- EP-A- 0 190 429
- EP-A- 1 346 869
- WO-A-20/04037614
- DE-A1- 3 731 109
- DE-A1- 4 302 925

## Description

### BACKGROUND OF THE INVENTION

### Field of the Invention

The present invention relates to a shift indication method for a manual transmission in a vehicle.

### Description of the Related Art

In the case that a driver driving an automobile including a manual transmission is not informed of information about whether or not the fuel efficiency of the automobile is good, the driver suitably performs a shift operation and depresses an accelerator pedal according to a vehicle speed as following the drive feeling by his/her own experience. It is therefore considerably difficult for the driver to drive the vehicle in the condition where the fuel consumption is minimized to obtain optimum fuel efficiency. It is now desirable to drive an automobile with a good fuel efficiency at all times from an economical point of view and for the purpose of CO2 reduction. For realization of this, it is necessary to always inform the driver of whether or not the present running condition of the vehicle during running is a condition providing a good fuel efficiency and also to indicate to the driver that the gear position is to be shifted when the fuel efficiency is poor.

By the provision of information about whether or not the fuel efficiency is good and by the indication of gear shifting based on this information, the driver can drive the vehicle according to this indication, so as to maintain a good fuel efficiency. Various shift indication methods for a manual transmission in an automobile have conventionally been proposed and put into practical use as described in the publications listed below. In these conventional methods, set values are preliminarily given for a vehicle speed, intake manifold pressure, engine speed, etc., and a range of running conditions providing a good fuel efficiency is set at each gear position according to the above set values. When the fuel efficiency during running at a certain gear position selected by the driver falls outside the above range, the driver is informed of this situation by means of lamp indication, and at the same time the driver is recommended to perform upshift or downshift according to this lamp indication.

In the control according to such a conventional shift indication method for a manual transmission in a vehicle as mentioned above, a shift indicator lamp provided in a meter indicates upshift or downshift to allow running with a good fuel efficiency through an driver's comfort. This control employs input signals from a vehicle speed sensor, clutch switch, etc. When any abnormal condition of an accelerator position sensor, vehicle speed sensor, clutch switch, atmospheric pressure sensor, etc. used for the control according to the shift indication method is detected, the control according to the shift indication method is stopped.

However, when the abnormality of a control system related to an air flow sensor, fuel pressure sensor, injector, engine coolant temperature sensor, intake air temperature sensor, etc. which are components unrelated to the control according to the shift indication method is detected, there is a case that torque limit control (fuel injection quantity limit control) is performed as a fail-safe action. In such a case, there occurs a situation such that the driver cannot drive the vehicle according to the indication of the shift indicator lamp. Therefore, it is necessary to cope with the case of system abnormality unrelated to parameters for use in the control according to the shift indication method.

### SUMMARY OF THE INVENTION

It is therefore an object of the present invention to provide a shift indication method for a manual transmission in a vehicle which can avoid such a situation that the driver cannot drive the vehicle according to the indication of a shift indicator lamp in the case of system abnormality unrelated to parameters for use in the control according to the shift indication method.

In accordance with an aspect of the present invention, there is provided a shift indication method for a manual transmission in a vehicle such that upshift or downshift is indicated by a shift indicator lamp according to an operational condition of the vehicle, the shift indication method including the steps of detecting the abnormality of a control system unrelated to parameters for use in the control according to the shift indication method; determining whether or not torque limit lowering control is to be performed when the abnormality of the control system is detected; and inhibiting the lighting of the shift indicator lamp when the torque limit lowering control is performed.

With the above configuration, the lighting of the shift indicator lamp is inhibited when the abnormality of the control system is detected to perform the torque limit lowering control. Accordingly, it is possible to avoid such a situation that the driver cannot drive the vehicle according to the indication of the shift indicator lamp, and the driver can perform his/her desired shift operation according to the circumstances.

Preferably, the abnormality of the control system is system abnormality due to the abnormality of a component selected from the group consisting of an air flow sensor, EGR valve/EGR solenoid, turbo/turbo solenoid, SCV/SCV solenoid, fuel pressure sensor, high-pressure fuel pump, injector, engine coolant temperature sensor, intake air temperature sensor, glow plug/glow plug control unit, intake shutter, exhaust gas temperature sensor, and DPF.

With this configuration, the abnormality of the control system is detected according to the failure of any one of the components mentioned above, and in this case an engine check lamp or any other warning lamp is usually turned on. Accordingly, it is possible to avoid such troublesomeness that the driver may follow the indication of the shift indicator lamp even in the case of system abnormality.

The above and other objects, features and advantages of the present invention and the manner of realizing them will become more apparent, and the invention itself will best be understood from a study of the following description and appended claims with reference to the attached drawings showing some preferred embodiments of the invention.

### BRIEF DESCRIPTION OF THE DRAWINGS

FIG. 1 is an elevational view of an instrument panel having an SIL;
FIG. 2 is a flowchart showing the shift indication method for the manual transmission according to the present invention; and
FIG. 3 is a graph showing the relation between engine speed and fuel injection quantity at each gear position and also showing the relation between torque limit in a normal case and torque limit in the case of system error.

### DETAILED DESCRIPTION OF THE PREFERRED EMBODIMENTS

A shift indication method for a manual transmission in general includes the steps of calculating a target gear position according to parameters indicative of engine operating conditions, such as engine speed and throttle angle, and indicating upshift when the target gear position is higher than the present gear position, whereas indicating downshift when the target gear position is lower than the present gear position, thus informing the driver of such an operation that the fuel efficiency is improved.

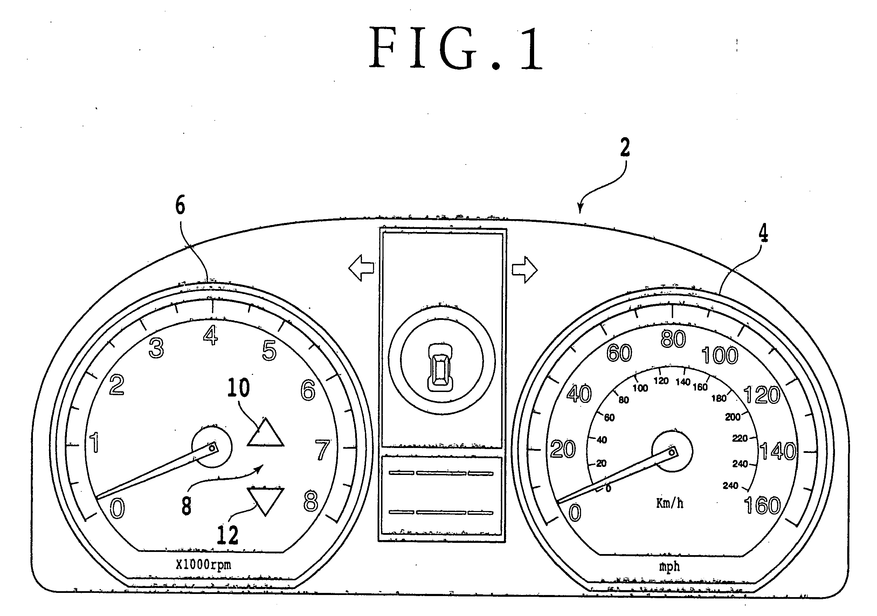

FIG. 1 shows an example of an instrument panel 2 having an SIL (shift indicator lamp) 8. The instrument panel 2 includes a speedometer 4 and a tachometer 6. The SIL 8 is provided in the tachometer 6. The SIL 8 has an upward lamp (upshift indicator) 10 and a downward lamp (downshift indicator) 12. When the upward lamp 10 is turned on, it indicates that the driver is recommended to perform upshift, whereas when the downward lamp 12 is turned on, it indicates that the driver is recommended to perform downshift. Accordingly, when the driver performs upshift or downshift according to the indication of the SIL 8, the fuel efficiency can be improved.

The control according to such a general shift indication method employs input signals from a vehicle speed sensor, accelerator position sensor, etc., and when any abnormal condition of these sensors is detected, the indication of the shift indicator lamp is stopped. However, in the case that an engine ECU (FI-ECU) detects the abnormality of a control system due to the failure of an air flow sensor, injector, engine coolant temperature sensor, intake air temperature sensor, etc. unrelated to the control according to this shift indication method, and performs torque limit control (fuel injection quantity limit control) as a fail-safe action, there occurs a situation such that the driver cannot drive the vehicle according to the indication of the shift indicator lamp.

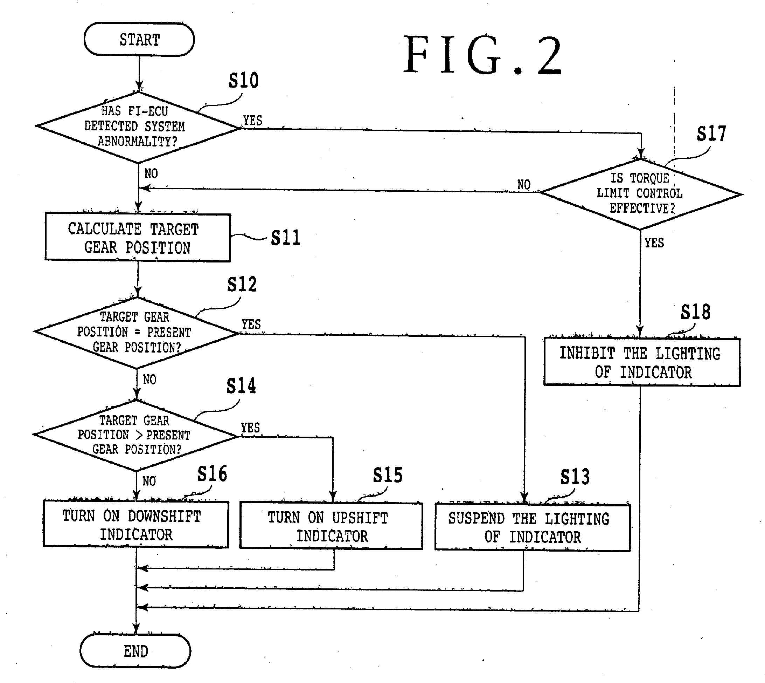

The shift indication method for the manual transmission according to the present invention intended to avoid the above situation will now be described with reference to the flowchart shown in FIG. 2. In step S10, it is determined whether or not the engine ECU (FI-ECU) has detected system abnormality. For example, the FI-ECU detects system abnormality in the case of the failure of an air flow sensor, EGR (exhaust gas recirculation) valve/EGR solenoid, turbo/turbo solenoid, SCV (swirl control valve)/SCV solenoid, fuel pressure sensor, high-pressure fuel pump, injector, engine coolant temperature sensor, intake air temperature sensor, glow plug/glow plug control unit, intake shutter, exhaust gas temperature sensor, DPF (diesel particulate filter), etc.

If the answer in step S10 is negative, i.e., if no system abnormality is detected, the program proceeds to step S11 to calculate a target gear position according to parameters indicative of engine operating conditions, such as engine speed and throttle angle. In step S12, it is determined whether or not the target gear position is the same as the present gear position. If the answer in step S12 is affirmative, the program proceeds to step S13 to suspend the lighting of the shift indicator lamp 8.

If the answer in step S12 is negative, the program proceeds to step S14 to determine whether or not the target gear position is higher than the present gear position. If the answer in step S14 is affirmative, the program proceeds to step S15 to turn on the upshift indicator 10, whereas if the answer in step S14 is negative, the program proceeds to step S16 to turn on the downshift indicator 12. Accordingly, when the driver performs upshift or downshift according to the indication of the shift indicator lamp (SIL) 8, the fuel efficiency can be improved.

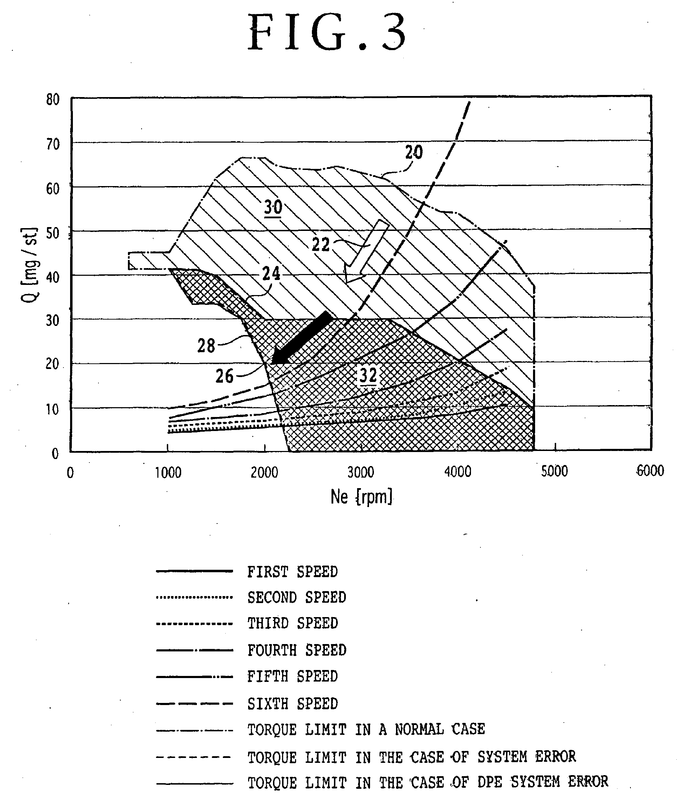

On the other hand, if the answer in step S10 is affirmative, i.e., if system abnormality is detected by the FI-ECU, the program proceeds to step S17 to determine whether or not torque limit control (fuel injection quantity limit control) is being performed. FIG. 3 shows the relation between engine speed and torque limit (fuel injection quantity limit) at each gear position during constant-speed running. The vertical axis denotes fuel injection quantity.

Reference numeral 20 denotes the torque limit in a normal case. Reference numeral 24 denotes the torque limit in the case of DPF system error, which is lowered from the torque limit 20 as shown by an arrow 22. Reference numeral 28 denotes the torque limit in the case of any system error other than the DPF system error, which is lowered from the torque limit 20 as shown by an arrow 26. When the DPF system error occurs, the vehicle cannot be driven in a range 30. Further, when any system error other than the DPF system error occurs, the vehicle cannot be driven not only in the range 30, but also in a range 32.

Accordingly, if the answer in step S17 is affirmative, i.e., if the torque limit control is being performed, the program proceeds to step S18 to inhibit the lighting of the shift indicator lamp (SIL) 8. Accordingly, the shift indicator lamp 8 is not turned on during the torque limit control, so that the driver can perform his/her desired shift operation according to the circumstances, and it is possible to avoid such a situation that the driver cannot drive the vehicle according to the indication of the shift indicator lamp 8.

Further, when the FI-ECU detects such a failure that the torque limit is lowered, an engine check lamp or any other warning lamp is usually turned on. Accordingly, it is possible to avoid such troublesomeness that the driver may follow the indication of the shift indicator lamp even in the case of system abnormality. If the answer in step S17 is negative, the program proceeds to step S11 to calculate the target gear position and to subsequently perform the steps S12 to S16.

## Claims

1. A shift indication method for a manual transmission in a vehicle such that upshift or downshift is indicated by a shift indicator lamp (8) according to an operational condition of said vehicle, said shift indication method comprising the steps of:
detecting the abnormality of a control system unrelated to parameters for use in the control according to said shift indication method;
determining whether or not torque limit (20) lowering control is to be performed when the abnormality of said control system is detected; and
inhibiting the lighting of said shift indicator lamp (8) when said torque limit (20) lowering control is performed.

2. The shift indication method according to claim 1, wherein the abnormality of said control system is system abnormality due to the abnormality of a component selected from the group consisting of an air flow sensor, EGR valve/EGR solenoid, turbo/turbo solenoid, SCV/SCV solenoid, fuel pressure sensor, high-pressure fuel plump, injector, engine coolant temperature sensor, intake air temperature sensor, glow plug/glow plug control unit, intake shutter, exhaust gas temperature sensor, and DPF.

## Patentansprüche

1. Schaltanzeigeverfahren für ein manuelles Getriebe in einem Fahrzeug, so dass ein Hochschalten oder Herunterschalten durch eine Schaltanzeigelampe (8) gemäß einem Betriebszustand des Fahrzeugs angezeigt wird, wobei das Schaltanzeigeverfahren die folgenden Schritte umfasst:
Detektieren der Abnormalität eines Steuersystems, welche nicht in Bezug zu Parametern zur Verwendung in der Steuerung gemäß dem Schaltanzeigeverfahren steht
Bestimmen, ob oder ob nicht eine Drehmomentgrenze (20), welche eine Steuerung herabsetzt, auszuführen ist, wenn die Abnormalität des Steuersystems detektiert wird; und
Sperren der Beleuchtung der Schaltanzeigelampe (8), wenn die die Drehmomentgrenze (20) herabsetzende Steuerung durchgeführt wird.

2. Schaltanzeigeverfahren gemäß Anspruch 1, wobei die Abnormalität des Steuersystems eine Systemabnormalität aufgrund der Abnormalität einer Komponente ist, welche ausgewählt ist aus der Gruppe bestehend aus einem Luftströmungsmesser, einem EGR-Ventil/EGR-Solenoid, Turbo-/Turbo-Solenoid, SCV/SCV-Solenoid, Kraftstoffdrucksensor, Hochdruck-Kraftstoffpumpe, Injektor, Motorkühlmittel-Temperatursensor, Einlassluft-Temperatursensor, Glühkerze/Glühkerzen-Steuereinheit, Einlassklappe, Abgastemperatursensor und DPF.

## Revendications

1. Procédé d'indication de changement de vitesse pour une transmission manuelle dans un véhicule tel qu'un passage à la vitesse supérieure ou un passage à la vitesse inférieure est indiqué par un voyant de changement de vitesse (8) en fonction d'une condition de fonctionnement dudit véhicule, ledit procédé d'indication de changement de vitesse comprenant les étapes consistant à :
détecter l'anomalie d'un système de commande sans relation avec les paramètres destinés à être utilisés pour la commande selon ledit procédé d'indication de changement de vitesse ;
déterminer si, oui ou non, une commande de diminution de limite de couple (20) doit être effectuée lorsque l'anomalie dudit système de commande est détectée ; et
empêcher l'allumage dudit voyant de changement de vitesse (8) lorsque ladite commande de diminution de limite de couple (20) est effectuée.

2. Procédé d'indication de changement de vitesse selon la revendication 1, dans lequel l'anomalie dudit système de commande est une anomalie de système due à l'anomalie d'un composant sélectionné dans le groupe consistant en un capteur de débit d'air, une soupape EGR/un solénoïde EGR, un turbocompresseur/un solénoïde de turbocompresseur, une SCV/ solénoïde de SCV, un capteur de pression de carburant, une pompe à carburant haute pression, un injecteur, un capteur de température de liquide de refroidissement de moteur, un capteur de température d'air d'admission, une bougie de préchauffage/ unité de commande de bougie de préchauffage, un obturateur d'admission, un capteur de température de gaz d'échappement et un DPF.
